# NEUE EUROPÄISCHE PATENTSCHRIFT

(11) **EP 2 862 614 B2**
(45) Veröffentlichungstag und Bekanntmachung des Hinweises auf die Entscheidung über den Einspruch: **23.08.2023**
(45) Hinweis auf die Patenterteilung: 05.12.2018
(21) Anmeldenummer: 14182486.2
(22) Anmeldetag: 27.08.2014
(51) Int. Cl.: B01D 46/00, B01D 46/52, B01D 46/24, F02M 35/02, F02M 35/024, F02M 35/08, B01D 39/18, B01D 46/64

(54) **Filtersystem mit Filterelement**
Filter system with filter element
Système de filtre équipé d'un élément de filtre

(30) Priorität: 02.09.2013 DE 102013014492
(43) Veröffentlichungstag der Anmeldung: 22.04.2015
(73) Patentinhaber: MANN+HUMMEL GmbH, 71636 Ludwigsburg (DE)
(72) Erfinder: Kaufmann, Michael, 67149 Meckenheim (DE); Ruhland, Klaus-Dieter, 67149 Meckenheim (DE); Marton, Imre, 67376 Harthausen (DE)
(74) Vertreter: Maiwald GmbH

(56) Entgegenhaltungen:
- EP-B1- 1 558 360
- WO-A1-2009/014986
- WO-A2-2014/085769
- DE-A1- 19 849 998
- US-A- 5 522 909
- US-A1- 2013 062 276
- US-B2- 7 572 310

## Beschreibung

### Technisches Gebiet

Die Erfindung betrifft ein Filtersystem mit einem Filterelement, insbesondere zur Verwendung als Luftfilter einer Brennkraftmaschine, sowie ein Filterelement zum Einbau in ein solches Filtersystem.

### Stand der Technik

Der Aufbau von Filtersystemen, in denen Rundfilterelemente zum Einsatz kommen, ist aus dem Stand der Technik bekannt. Die Rundfilterelemente werden im Einsatz häufig von außen nach innen durchströmt, wobei das filtrierte Fluid aus dem zylindrischen Innenraum durch eine Öffnung im Deckel oder Boden des Rundfilterelementes zum Ausgang des Filtergehäuses geleitet wird. Der Durchmesser der Ausgangsöffnung in der Abdeckung des Rundfilterelements ist durch den Durchmesser des Innenraums des Filterelements begrenzt. Dieser ergibt sich aus dem Durchmesser des Filterelements abzüglich der Faltenhöhe des eingesetzten Filtermediums.

Einerseits erlaubt eine möglichst große Faltenhöhe eine große effektive Filterfläche des Filterelements bei gleichbleibenden Außenabmessungen. Andererseits muss die Ausgangsöffnung für das gefilterte Fluid einen ausreichenden Querschnitt aufweisen, um das Fluid ableiten zu können. Bei vorgegebenen Abmessungen des Filterelements ist daher zwischen diesen beiden Gestaltungseinflüssen abzuwägen und ein Kompromiss zu finden.

Aus der DE 198 49 998 A1 ist eine Filterpatrone bekannt, die außen zylindrisch ist und einen konischen Innenraum aufweist.

Aus der WO 2014/085769 A2 ist ein Sekundärfilterelement mit einem ungefalteten Ende und einem gefalteten Ende bekannt.

Aus der EP 1558360 B1 sind konisch geformte Filterelemente bekannt, welche jedoch auf Grund der konischen Form, die sich entgegen der Auslassrichtung des Filtersystems mit einem bestimmten Winkel öffnet, einen größeren Bauraumbedarf aufweisen. Auch sind gefaltete Sekundärelemente bekannt, die aber gegenüber Sekundärelementen mit glatten Filtermedien zusätzlichen Bauraum beanspruchen.

Eine Aufgabe der Erfindung ist es daher, ein kompaktes Filtersystem mit wenigstens einem austauschbaren Filterelement aus einem Filtermedium so zu gestalten, dass eine möglichst hohe Abscheiderate für Staubpartikel bei günstigem Bauraum erreicht werden kann.

Eine weitere Aufgabe der Erfindung ist es, ein Filterelement zum Einbau in ein solches Filtersystem zu schaffen, mit dem eine möglichst hohe Abscheiderate für Staubpartikel bei günstigem Bauraum erreicht werden kann.

Die vorgenannten Aufgaben werden gelöst mit einem Filtersystem und einer Verwendung gemäß einem der unabhängigen Ansprüche.

Günstige Ausgestaltungen und Vorteile der Erfindung ergeben sich aus den weiteren Ansprüchen, der Beschreibung und der Zeichnung.

### Offenbarung der Erfindung

Es wird ein Filtersystem mit einem oder mehreren, mit wenigstens einem Filtermedium ausgestatteten Filterelementen vorgeschlagen, wobei sich wenigstens ein Filterelement entlang einer Längsachse erstreckt, wobei das Filtersystem ein Gehäuse mit Gehäusewand und einem Deckel umfasst, wobei am Gehäuse ein Einlass zum Zuführen eines zu filternden Fluids, insbesondere Luft, und ein Auslass zur Ableitung des gefilterten Fluids angeordnet ist, wobei das Filtermedium zickzackförmig gefaltet ist und eine Mehrzahl von sich entlang der Längsachse erstreckenden Außenkanten und den Außenkanten auf der gegenüberliegenden Seite des Filtermediums gegenüberliegende Innenkanten von Falten aufweist, und wobei das Filtermedium einen entlang der Längsachse veränderlichen Strömungswiderstand aufweist. Der entlang der Längsachse veränderliche Strömungswiderstand bewirkt eine besonders effektive Abscheidung von Partikeln, insbesondere Staubpartikeln aus dem zu filternden Fluid wie Luft. Dabei sind verschiedene vorteilhafte Ausführungsformen des Filtermediums möglich.

Erfindungsgemäß umfasst das Filtersystem ein erstes, mit wenigstens einem Filtermedium ausgestattetes Filterelement und ein im Inneren des Filterelements angeordnetes Sekundärelement, wobei sich das Filterelement und das Sekundärelement entlang einer Längsachse erstrecken, ein Gehäuse mit Gehäusewand und einem Deckel, einen am Gehäuse tangential angeordneten Einlass zum Zuführen eines zu filternden Fluids, insbesondere Luft, einen am Gehäuse angeordneten zentrischen Auslass zur Ableitung des gefilterten Fluids, wobei das Filtermedium des Filterelements zickzackförmig gefaltet und ringförmig geschlossen ausgeführt ist und eine Mehrzahl von sich entlang der Längsachse erstreckenden Außenkanten und den Außenkanten auf der gegenüberliegenden Seite des Filtermediums gegenüberliegende Innenkanten von Falten aufweist, wobei die Außenkanten und die Innenkanten der Falten auf den Mantelflächen eines Zylinders liegen, wobei das Filtermedium des Sekundärelements zickzackförmig gefaltet und ringförmig geschlossen ausgeführt ist und eine Mehrzahl von sich entlang der Längsachse erstreckenden Außenkanten und den Außenkanten auf der gegenüberliegenden Seite des Filtermediums gegenüberliegende Innenkanten von Falten aufweist, wobei die Außenkanten der Falten auf einer Mantelfläche eines Zylinders liegen und die Innenkanten auf der Mantelfläche eines Konus liegen, wobei die Faltenhöhe auf Auslassseite verringert ist, und wobei das Filtermedium des Sekundärelements einen entlang der Längsachse veränderlichen Strömungswiderstand aufweist.

Der Deckel des Gehäuses kann in einer bevorzugten Ausführungsform an einer Stirnseite des Gehäuses angeordnet sein und somit konzentrisch um die Längsachse aufgebaut sein, während der Einlass in der Gehäusewand oder dem Deckel angeordnet sein kann. Der Auslass kann weiter konzentrisch zur Längsachse angeordnet sein, um das Filtersystem besonders bauraumsparend verbauen zu können.

In einer erfindungsgemäßen Ausgestaltung als sogenanntes plissiertes, d.h. zickzackförmig, gefaltetes Filtermedium, insbesondere sterngefaltetes Filtermedium, können die Außenkanten des Filtermediums von dem zu filternden Fluid angeströmt werden, sodass die abgelagerten Schmutzpartikel auf der Außenseite des Filtermediums verbleiben, jedoch können auch andere Anströmbedingungen vorteilhaft sein. Bei einem sterngefalteten Filtermedium ist dieses in sich geschlossen, z. B. mit einem ringförmigen oder eckigen Querschnitt. So kann das Filtermedium auch von außen nach innen oder umgekehrt durchströmt werden.

Zum einen können die Außenkanten der Falten auf einer Mantelfläche eines Zylinders liegen und die Innenkanten zumindest teilweise auf der Mantelfläche eines Konus liegen. Dies hat den Vorteil, dass die äußere Bauform des Filterelements und damit des Filtersystems zylindrisch sein kann, was für eine Reihe von Anwendungen mit geringem Bauraumangebot von Nutzen sein kann. Die zylinderförmige Mantelfläche ist dadurch gekennzeichnet, dass sie entlang der Längsachse den gleichen Radius, also gerade Wände, aufweist. Die konusförmige Mantelfläche zeigt dagegen entlang der Längsachse eine Änderung des Radius, also eine kegelförmige Gestalt, wobei in der erfindungsgemäßen Ausführungsform ein Öffnungswinkel des Konus im Bereich von 1° bis typischerweise 10°, bevorzugt zwischen 1° und 5°, liegen kann.

Eine Faltung des Filtermediums, bei der mindestens eine Kante der Falten auf der Mantelfläche eines Konus liegt, wird im Folgenden als halbkonische Faltung bezeichnet.

Generell ist zwar eine zylinderförmige Bauform eines Filtersystems sehr verbreitet und zweckmäßig für den Einbau in Bauräume von Brennkraftmaschinen, jedoch können die äußeren Abmessungen auch eckige oder flache Formen aufweisen, die so auch eckige und/oder flache Mantelflächen für die Außenkanten von Falten des Filtermediums zur Folge haben können.

Aus dem Stand der Technik sind bei Rundluftfiltern so genannte sterngefaltete Filterelemente mit gerader Falte in zylindrischer oder konischer Bauform bekannt. Auch Sekundärelemente, also Filterelemente, die im Inneren der eigentlichen Filterelemente zur Absicherung des Reinluftbereichs vor Verschmutzung beim Wechsel von Filterelementen eingesetzt werden, mit Vliesmaterial ummantelt, auch wiederrum in zylindrischer oder konischer Bauform, gehören zum Stand der Technik. Der Einsatz einer halbkonischen Faltung wie oben beschrieben ist in zweistufigen Luftfiltern mit Zyklonabscheidern, mit oder ohne nachgeschaltetes Sekundärelement, in zylindrischer oder konischer Bauform besonders vorteilhaft, da so eine besonders effektive Partikelabscheidung bei besonders geringem Bauraumbedarf möglich ist.

Weitere Vorteile liegen in einer besseren Luftführung mit möglichen größeren Querschnitten, beispielsweise im Bereich des Reinluftauslasses, was dazu führt, dass der Druckverlust des Gesamtluftfilters reduziert werden kann. Außerdem ist die spezifische Staubbeladung, also die Staubmasse pro Filterfläche am eigentlichen Filterelement besser, was zu größeren Standzeiten des Filterelements bei trotzdem gleichem Bauraum führt.

Im Bereich des Einlasses des Filtersystems ist ein Zyklonabscheider vorgesehen (zweistufiges Luftfiltersystem) und am Gehäuse oder am Deckel ist ein Schmutzauslass vorgesehen. Dieser Zyklonabscheider besteht aus einer Leitgeometrie, die das zu filternde Fluid in eine Rotation versetzt. Durch diese Rotation wird der Schmutz im Bereich der Gehäusewand aufkonzentriert und an einer geeigneten Stelle über einen Schmutzauslass ausgetragen. Durch die Vorabscheidung des größten Teils an Schmutz aus der zu filternden Luft kann die Standzeit des eigentlichen Filterelements entscheidend verlängert werden.

Zweckmäßigerweise kann sich in einer vorteilhaften Ausführungsform eine Faltenhöhe der Falten entlang der Längsachse kontinuierlich ändern. Auf diese Weise ist eine effektive Darstellung der halbkonisch gefalteten Bauform eines erfindungsgemäßen Filtermediums besonders günstig ermöglicht. Weiter kann so der Strömungswiderstand entlang der Längsachse kontinuierlich eingestellt werden, um die Abscheidungsrate der Partikel günstig zu beeinflussen.

In dem erfindungsgemäßen Filtersystem ist eines von zwei Filterelementen im Inneren des anderen der Filterelemente angeordnet. Ein solches zweistufiges Filtersystem ist gerade für den Einsatz unter anspruchsvollen Bedingungen wie großem Staubanfall, beispielsweise im Bau- und Landmaschinenbereich, von großem Vorteil, da beim Wechsel des äußeren Filterelements das innere Filterelement den Reinluftauslass vor Verschmutzung wirkungsvoll schützen kann.

Erfindungsgemäß ist ein Sekundärelement im Inneren des Filterelements angeordnet. Das Sekundärelement, das aus einer tragenden Struktur bestehen kann, die mit einem durchlässigen Filtermedium, beispielsweise einem Vlies, verkleidet ist, hat die Aufgabe, bei einem Austausch des Filterelements den Auslass des Filtersystems weiterhin verschlossen zu halten, so dass kein Schmutz in diesen Bereich eindringen kann, während das Filterelement gereinigt oder erneuert wird. Ein solches Filtersystem ist gerade für den Einsatz unter anspruchsvollen Bedingungen wie großem Staubanfall, beispielsweise im Bau- und Landmaschinenbereich, von großem Vorteil, da beim Wechsel des äußeren Filterelements das Sekundärelement den Reinluftauslass vor Verschmutzung wirkungsvoll schützen kann. Das Sekundärelement kann in bevorzugter Ausgestaltung über eine Schraubverbindung mit dem Gehäuse verbunden und zum Gehäuse mit einer Dichtung versehen sein.

Vorteilhaft kann dabei ein Stützrohr im Inneren des Sekundärelements angeordnet sein. Durch das Stützrohr kann ein in sich instabiles Filterelement wie auch ein Sekundärelement versteift werden, um so sowohl gegen Strömungsdruck als auch mechanische Erschütterungen im Betrieb an einer Brennkraftmaschine die ursprüngliche Form zu behalten und die bestimmungsgemäße Funktion weiter zuverlässig auszuüben.

In einer Ausführungsform kann das Sekundärelement mit dem Gehäuse verbunden sein und beim Wechsel des Filterelements im Gehäuse verbleiben. Dadurch ist der Reinluftauslass bei Wechsel des Filterelements besonders wirksam gegen Verschmutzung geschützt. Auch kann die feste Anbringung des Sekundärelements am Gehäuse die Herstellung einer besonders kostengünstigen Ausführungsform des Filtersystems begünstigen.

ist das Sekundärelement nicht mit dem Gehäuse fest verbunden, sondern wechselbar ausgeführt, dann kann eine Endscheibe des Sekundärelements zur besseren Montage/ Demontage als Handgriff ausgebildet sein.

Zweckmäßigerweise kann wenigstens eines der ein oder mehreren Filterelemente auswechselbar in dem Gehäuse des Filtersystems angeordnet sein. Gerade beim Einsatz eines Filtersystems unter besonders rauen Umweltbedingungen können Filterelemente so mit Staub beladen werden, dass sie in relativ kurzen zeitlichen Abständen getauscht werden müssen und dabei natürlich nicht jedes Mal das gesamte Filtersystem ausgetauscht werden soll, was zu erheblichem Mehraufwand an Betriebskosten führen würde.

Vorteilhaft kann eine Verwendung eines Filtersystems als Luftfilter, insbesondere als Luftfilter einer Brennkraftmaschine sein.

In einer günstigen Ausgestaltung kann das Filtermedium beispielsweise aus einem zickzackförmig gefalteten (plissierten) Filterbalg bestehen und ringförmig geschlossen ausgeführt sein. Die Faltung kann beispielsweise durch Messerfaltung, für längere Filterkörper, oder Rotationsfaltung hergestellt werden. Der Filterbalg kann beispielsweise aus Papier oder aus Zellulose oder aus einer Mischfaser aus Kunststoff und Zellulose bestehen. Der Filterbalg kann ferner mit glatter Oberfläche, rolliert und/oder in verschiedenen Prägeformen gestalteter Oberfläche zur Versteifung und/oder Schaffung von Hohlräumen zur Staubablagerung ausgeführt sein. Der Filterbalg kann eine Beschichtung und/oder Imprägnierung aufweisen, um Feuchtigkeit abzuweisen. Er kann alternativ auch mit so genannten Nanofasern beschichtet sein. Der Filterkörper kann weiterhin mit einem Fadenwickel strukturell versteift sein. Dabei ist ein Faden um den Umfang des Filterkörpers gewickelt. Es können auch mehrere Fadenwickel auf unterschiedlichen axialen Höhen des Filterkörpers vorgesehen sein. Der Einsatz dieser Werkstoffe als Filtermedium stellt eine sehr wirtschaftliche Möglichkeit dar, ein solches Filterelement zu realisieren. Gleichzeitig bietet die beschriebene Formgestaltung eine stabile Anordnung, sodass eine selbsttragende Bauweise des Filterkörpers und damit eine günstige Montageeigenschaft gegeben sind.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine perspektivische Ansicht eines zweistufigen Filtersystems mit einem Zyklonabscheider nach einem Ausführungsbeispiel der Erfindung;
- Fig. 2: einen Längsschnitt durch ein für das Verständnis der Erfindung hilfreiches Filterelement mit innen liegendem Sekundärelement, wobei die Konusformen der halbkonischen Faltung in der Längsachse in dieselbe Richtung zeigen;
- Fig. 3: einen Längsschnitt durch ein für das Verständnis der Erfindung hilfreiches Filterelement mit innen liegendem Sekundärelement, wobei die Konusformen der halbkonischen Faltung in der Längsachse in die entgegengesetzte Richtung zeigen;
- Fig. 4: einen Längsschnitt durch ein Filtersystem nach einem Ausführungsbeispiel der Erfindung, bei dem das Filtermedium des Filterelements eine gerade Faltung aufweist und ein innen liegendes Sekundärelement eine halbkonische Faltung aufweist;
- Fig. 5: einen Längsschnitt durch ein für das Verständnis der Erfindung hilfreiches Filtersystem, bei dem das Filtermedium des Filterelements und das innen liegende Sekundärelement eine halbkonische Faltung aufweisen, die in der Längsachse in dieselbe Richtung zeigen;
- Fig. 6: einen Längsschnitt durch ein für das Verständnis der Erfindung hilfreiches Filtersystem, bei dem das Filtermedium des Filterelements eine halbkonische Faltung aufweist und das Filtermedium des Sekundärelements aus einem Vlies besteht;
- Fig. 7: ein Filterelement nach einem Ausführungsbeispiel der Erfindung mit halbkonischer Faltung des Filtermediums; und
- Fig. 8: ein Filtermedium nach einem Ausführungsbeispiel der Erfindung mit halbkonischer Faltung des Filtermediums.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

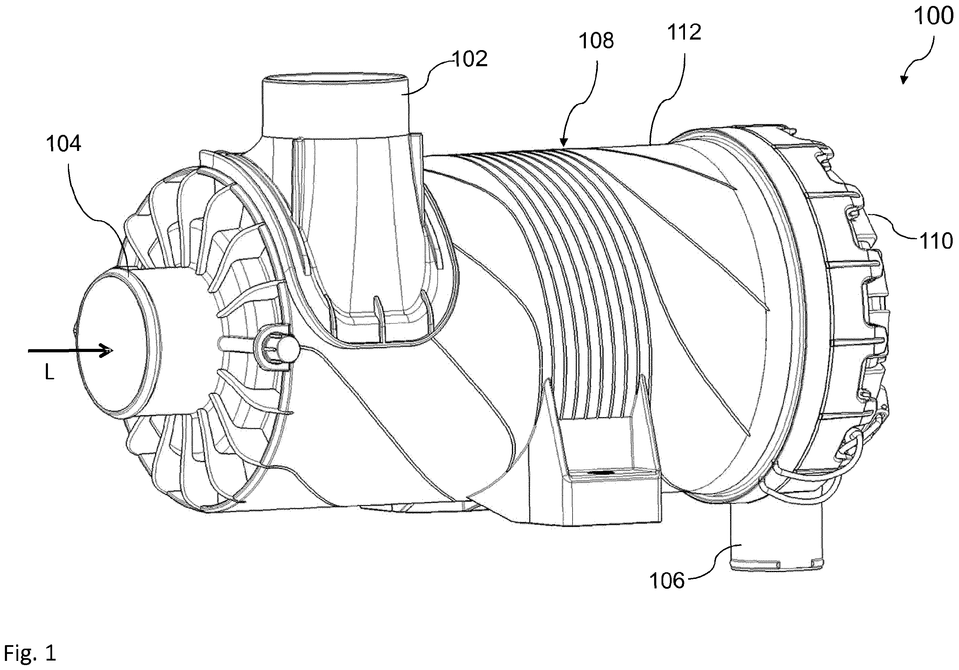

Figur 1 zeigt eine perspektivische Ansicht eines zweistufigen Filtersystems 100 mit einem Zyklonabscheider 36 nach einem Ausführungsbeispiel der Erfindung mit tangentialem Einlass 102, zentrischem Auslass 104 an einer Gehäusestirnseite und bodenseitigem Schmutzauslass 106. Dargestellt ist eine Rundfilterbauform, die aus einem Gehäuse 108 besteht, das eine Gehäusewand 112 aufweist und mit einem Deckel 110, beispielsweise mit Schraub- oder Bajonettverschluss, verschlossen wird. Bei einer Verwendung als Luftfiltersystem strömt staubbeladene Luft in den Einlass 102, der tangential zum innen eingebauten Luftfilterelement angeordnet ist, sodass die Luft im Innern des Gehäuses 108 durch einen Anströmschutz am Filterelement in eine Rotationsbewegung versetzt wird. Filterelement und Anströmschutz sind in der Zeichnung nicht dargestellt. Durch den über die Rotationsbewegung der Luft bewirkten Zykloneffekt wirken Fliehkräfte auf die Staubpartikel der strömenden Luft, sodass diese sich teilweise an der Gehäusewand abscheiden und über den Schmutzauslass 106 aus dem Filtersystem 100 abströmen können. Dadurch wird das Filterelement weniger belastet, die Standzeit des Filterelements wird erhöht. Die gereinigte Luft kann über den zentrischen Auslass 104 aus dem Gehäuse 108 abgeführt werden.

Derartige Filtersysteme, wie in Figur 1 dargestellt, werden üblicherweise als Luft- und/oder Partikelfilter insbesondere für Brennkraftmaschinen im Baumaschinen- und Landmaschinenbereich eingesetzt. Sie zeichnen sich durch große Robustheit aus und weisen wegen der hohen Filterlast kurze Standzeiten auf. Ein Filtersystem 100 mit beladenem Filterelement muss dabei einen Gewichtszuwachs von 10 kg oder mehr tolerieren.

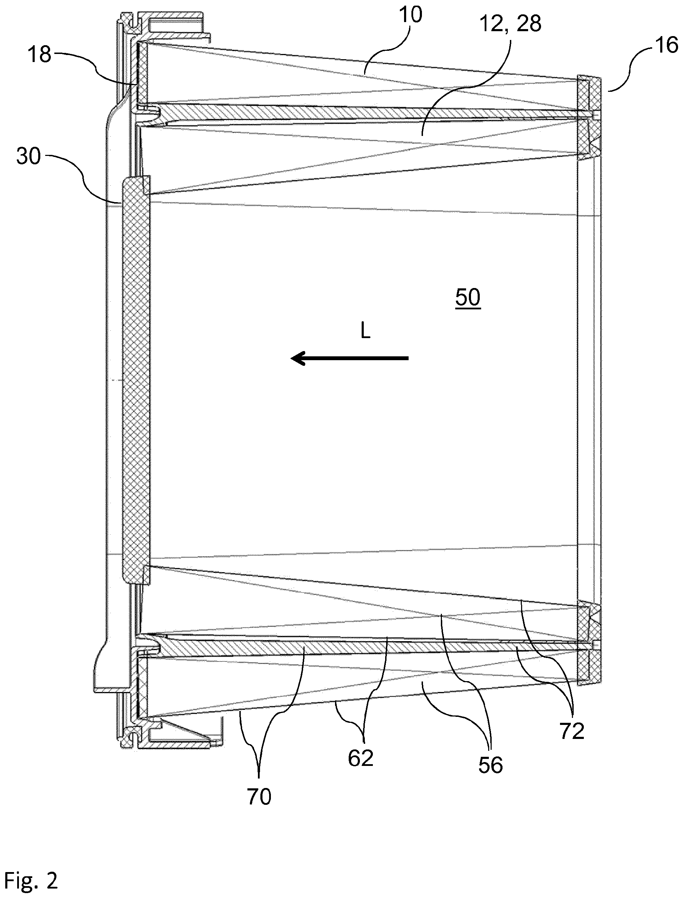

Figur 2 zeigt einen Längsschnitt durch ein für das Verständnis der Erfindung hilfreiches Filterelement 10 mit innen liegendem Sekundärelement 12, 28, wobei die Konusformen der halbkonischen Faltung des Filtermediums 56 in der Längsachse L in dieselbe Richtung zeigen. In Figur 2 ist ein Filterelement 10 dargestellt, in dessen Innerem 50 ein zweites Filterelement 12 angeordnet ist, das beispielsweise als Sekundärelement 28 eingesetzt ist. Das Filterelement 10 ist an beiden Enden mit einer ersten und einer zweiten Endscheibe 16, 18 abgeschlossen, welche dem Filterelement 10 Stabilität verleihen und für die Abdichtung beim Einbau in ein Gehäuse 108 eines Filtersystems 100 sorgen. Das Sekundärelement 28 ist am oberen Ende mit einer Endscheibe 30 abgeschlossen, am unteren Ende offen, damit das gefilterte Fluid austreten kann. Das Filterelement 10 ist so angeordnet, dass die Innenkanten 72 der Faltung des Filtermediums 56 auf der Mantelfläche eines Zylinders liegen, während die Außenkanten 70 auf der Mantelfläche eines Konus liegen, wobei das Filterelement 12 so angeordnet ist, dass die Innenkanten 72 der Falten 62 des Filtermediums 56 auf der Mantelfläche eines Konus liegen, während die Außenkanten 70 auf der Mantelfläche eines Zylinders liegen. Auf diese Weise können beide Filterelemente 10, 12 so dicht wie möglich zueinander angeordnet werden, während das Innere der Filterelemente 10, 12 sich in entgegengesetzt zur Längsachse L, in Auslassrichtung weit öffnet und so einen guten Durchfluss für das gefilterte Fluid gewährt.

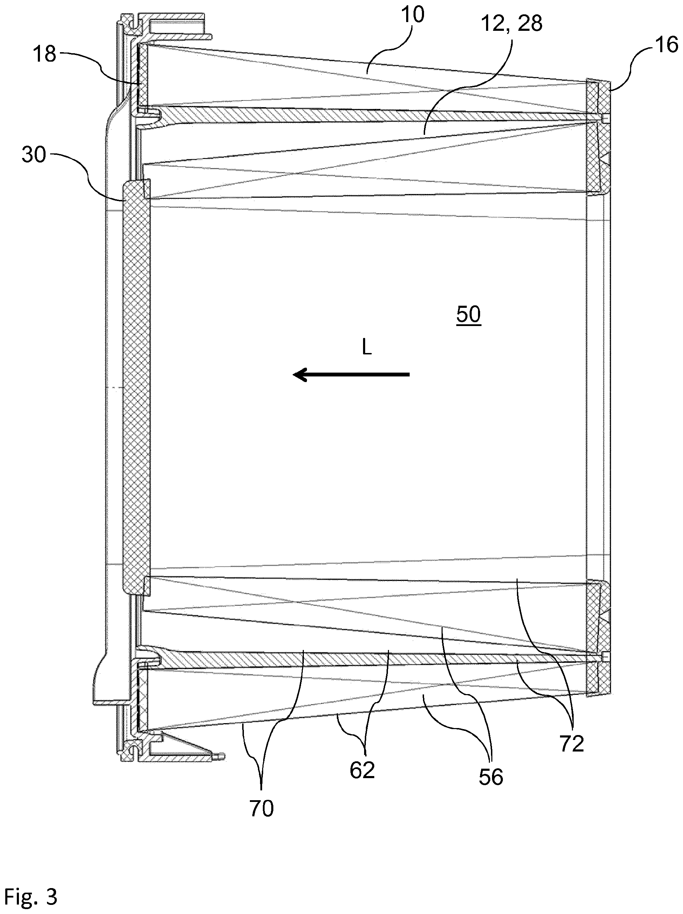

Figur 3 zeigt einen Längsschnitt durch ein für das Verständnis der Erfindung hilfreiches Filterelement 10 mit innen liegendem Sekundärelement 12, 28, wobei die Konusformen der halbkonischen Faltung des Filtermediums 56 in der Längsachse L in die entgegengesetzte Richtung zeigen. In Figur 3 ist ein Filterelement 10 dargestellt, in dessen Innerem 50 ein zweites Filterelement 12 angeordnet ist, das beispielsweise als Sekundärelement 28 eingesetzt ist. Das Filterelement 10 ist an beiden Enden mit einer ersten und einer zweiten Endscheibe 16, 18 abgeschlossen, welche dem Filterelement 10 Stabilität verleihen und für die Abdichtung beim Einbau in ein Gehäuse 108 eines Filtersystems 100 sorgen. Das Sekundärelement 28 ist am oberen Ende mit einer Endscheibe 30 abgeschlossen, am unteren Ende offen, damit das gefilterte Fluid austreten kann. Das Filterelement 10 ist so angeordnet, dass die Innenkanten 72 der Falten 62 des Filtermediums 56 auf der Mantelfläche eines Zylinders liegen, während die Außenkanten 70 auf der Mantelfläche eines Konus liegen, wobei das Filterelement 12 so angeordnet ist, dass die Innenkanten 72 der Falten 62 des Filtermediums 56 auf der Mantelfläche eines Zylinders liegen, während die Außenkanten 70 auf der Mantelfläche eines Konus liegen. Auf diese Weise stellt das Innere 50 einen zylinderförmigen offenen Bereich dar, sodass das Filterelement 12 beispielsweise auf ein zylinderförmiges Stützrohr aufgesteckt werden kann.

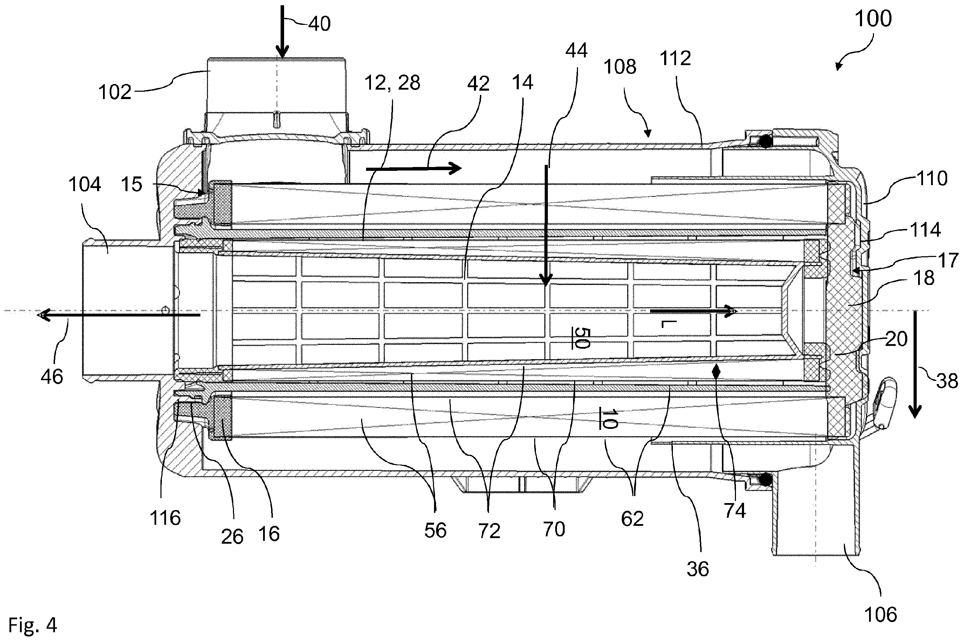

In Figur 4 ist ein Längsschnitt durch ein Filtersystem 100 nach einem Ausführungsbeispiel der Erfindung dargestellt, bei dem das Filtermedium 56 des Filterelements 10 eine gerade Faltung aufweist und ein innen liegendes Sekundärelement 28 als zweites Filterelement 12 eine halbkonische Faltung aufweist. Das Gehäuse 108 des Filtersystems 100, das eine Gehäusewand 112 umfasst, ist an einer Stirnseite mit einem Deckel 110 verschlossen. Ein Filterelement 10, das ein konzentrisch zu einer Längsachse L angeordnetes Filtermedium 56 umfasst, ist an zwei gegenüberliegenden Stirnseiten 15, 17 mit einer ersten und einer zweiten Endscheibe 16, 18, die beispielsweise aus Polyurethanschaum oder einem Elastomer ausgeführt sein können, abgeschlossen. Das Filtermedium 56 kann beispielsweise zickzackförmig gefaltet, ringförmig geschlossen ausgeführt sein und beispielsweise aus Papier oder aus Zellulose oder aus einer Mischfaser aus Kunststoff und Zellulose bestehen.

Die zweite Endscheibe 18 weist Abstütznoppen 20 auf, welche bei einem Einbau in das aufnehmende Gehäuse 108 an einer inneren Deckelkontur 114 des Deckels 110 anliegend sich an dem Gehäuse 108 sowohl axial als auch radial abstützen. An der gegenüberliegenden Stirnseite 15 des Filterelements 10 ist an der ersten Endscheibe 16 eine Radialdichtung 26 angebracht, mit deren Hilfe das Filterelement 10 sich mit einer Radialdichtung 26 über die Dichtungskontur 116 an dem Gehäuse 108 radial abstützt und den ungefilterten gegen den gefilterten Luftraum abdichtet. Das Filterelement 10 ist damit sowohl axial als auch doppelt radial gegen das Gehäuse 108 verspannt.

Staubbeladene Luft kann durch den Einlass 102 in Pfeilrichtung 40 einströmen, der in diesem Fall als tangentialer Einlass dargestellt ist und durch die mit Hilfe eines Zyklonabscheiders 36 bewirkte Rotationsbewegung der Luft einen Zyklonbetrieb ermöglicht. Staubpartikel können durch die Rotationsbewegung teilweise vorabgeschieden sich an der inneren Gehäusewand ablagern und durch den Schmutzauslass 106 bei Einbau des Filtergehäuses 108 in waagrechter Lage nach unten durch die Schwerkraft aus dem Filtersystem 100 entleert werden. Die Luft strömt beim Betrieb nach Teilabscheidung der Staubpartikel durch das Filtermedium 56 in Pfeilrichtung 42, 44 ins Innere 50 des Filterelements. Staubpartikel bleiben dabei je nach Filtermedium ab einer bestimmten Größe im Filtermedium 56 hängen. Je nach Staubeintrag muss deshalb das Filterelement 10 nach einer gewissen Standzeit ausgetauscht werden.

Über den Auslass 104 strömt die gefilterte Luft in Pfeilrichtung 46 ab. Im Inneren 50 des Filterelements 10, also im Reinluftbereich, ist das Sekundärelement 28 angebracht, das im Wesentlichen aus einer tragenden Struktur, dem Stützrohr 14 und einem relativ durchlässigen Filtermedium 56, das in Figur 4 halbkonisch gefaltet dargestellt ist, besteht und beim Austausch des Filterelements 10 im Gehäuse 108 zum Schutz der weiteren Luftführung, beispielsweise einer Brennkraftmaschine, gegen eindringende Staubpartikel und andere Gegenstände verbleibt. Das Sekundärelement 28 ist am auslassseitigen Teil des Gehäuses 108 angebracht und mit einer Radialdichtung gedichtet.

Der Konus der halbkonischen Faltung des Sekundärelements 28 ist so angeordnet, dass er entgegengesetzt zur Längsrichtung L, also in Auslassrichtung, sich öffnet, um so einen möglichst geringen Strömungswiderstand für das gefilterte Fluid darzustellen. Die Innenkanten 72 der Falten 62 des Sekundärelements 28 liegen auf der Mantelfläche eines Konus, während die Außenkanten 70 auf der Mantelfläche eines Zylinders liegen. Das Filtermedium 56 des Filterelements 10 weist eine gerade Faltung auf, bei der die Innen- und Außenkanten 72, 70 der Falten 62 auf den Mantelflächen eines Zylinders liegen.

Der Vorteil des in Figur 4 dargestellten Ausführungsbeispiels liegt darin, dass das Sekundärelement 28 in seiner Außenkontur zylindrisch ausgeführt sein und somit auf ein gehäusefestes Stützrohr 14 gesteckt werden kann. Zugleich kann für geringe Anforderungen hinsichtlich Abscheidegrad und Druckverlust nach wie vor ein Sekundärelement 28, ausgestattet mit Vlies, im gleichen Gehäuse optional vorgesehen werden.

Durch die halbkonische Ausführung kann an dem Sekundärelement 28 durch eine mögliche kleinere Faltenteilung eine größere Filterfläche vorgesehen werden, im Vergleich zu einer geraden Faltung gleicher Faltenhöhe 74 (auf der Auslassseite). Die größere Filterfläche trifft auch auf den Vergleich mit dem Vliesmedium zu, das ja in dieser geringen Höhe überhaupt nicht gefaltet werden kann und somit lediglich die Zylinderfläche der Außenkontur bildet.

Die große Filterfläche zusammen mit dem nach wie vor großen Auslassquerschnitt auf der Auslassseite bietet dann den Vorteil eines sehr geringen Druckverlusts.

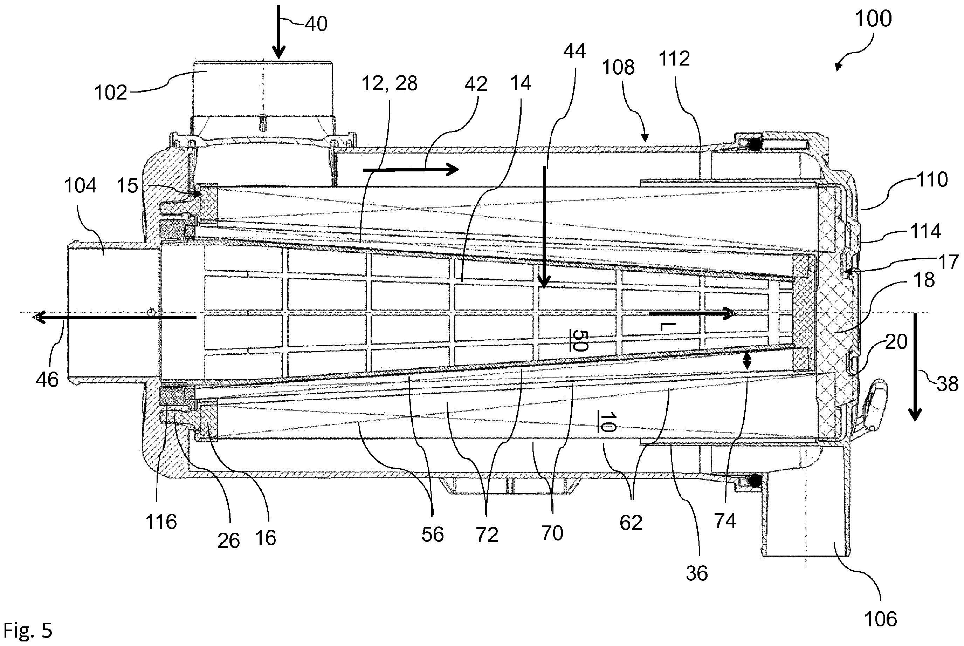

Figur 5 zeigt einen Längsschnitt durch ein für das Verständnis der Erfindung hilfreiches Filtersystem 100, bei dem das Filtermedium 56 des Filterelements 10 und das innen liegende Sekundärelement 28 eine halbkonische Faltung aufweisen, die in der Längsachse L in dieselbe Richtung zeigen.

Der Konus der halbkonischen Faltung des Sekundärelements 28 ist so angeordnet, dass er entgegengesetzt zur Längsrichtung L, also in Auslassrichtung, sich öffnet, um so einen möglichst geringen Strömungswiderstand für das gefilterte Fluid darzustellen. Sowohl die Innenkanten 72 der Falten 62 des Sekundärelements 28 als auch die Außenkanten 70 liegen auf den Mantelflächen von zwei Konusformen. Das Sekundärelement 28 ist auf einem ebenfalls konischen Stützrohr 14 angebracht. Das Filtermedium 56 des Filterelements 10 weist ebenfalls eine halbkonische Faltung auf, bei der die Innenkanten 72 auf der Mantelfläche eines Konus und die Außenkanten 70 der Falten 62 auf den Mantelflächen eines Zylinders liegen. Da die Konusformen des Sekundärelements 28, wie die Konusform des Filterelements 10 entgegengesetzt zur Längsachse L, also in Auslassrichtung, geöffnet sind, ist eine möglichst dichte Packung von Filterelement 10 und Sekundärelement 28 möglich, sodass das Innere 50 des Filterelements 10 sich möglichst weit zum Auslass 104 hin öffnen kann und so einen möglichst geringen Strömungswiderstand dem gefilterten Fluid entgegensetzt.

Der Vorteil des in Figur 5 dargestellten Ausführungsbeispiels liegt darin, dass die Konusform durch diese Anordnung im Inneren 50 jetzt noch stärker ausgeprägt ist, was die Strömungsführung und somit den Druckverlust weiter optimiert.

Durch die halbkonische Faltung des Filtermediums 56 kann am Sekundärelement 28 durch eine mögliche kleinere Faltenteilung eine größere Filterfläche vorgesehen werden im Vergleich zu einer geraden Faltung gleicher Faltenhöhe 74 (auf der Auslassseite). Die größere Filterfläche trifft auch auf den Vergleich mit dem Vliesmedium zu, das ja in dieser geringen Höhe überhaupt nicht gefaltet werden kann und somit lediglich die Zylinderfläche der Außenkontur bildet.

Die große Filterfläche zusammen mit dem nach wie vor großen Auslassquerschnitt auf der Dichtungsseite bietet dann den Vorteil eines sehr geringen Druckverlusts.

Das mit halbkonischer Faltung ausgestattete Filterelement 10 bietet nun die Möglichkeit, zum einen auf der Auslassseite den Auslassquerschnitt weiter zu öffnen, indem die Faltenhöhe 74 auf dieser Seite verringert wird (positiv für den Druckverlust), und zum Anderen keinen Verlust an Filterfläche aufzuweisen, weil die Faltenhöhe 74 auf der geschlossenen Seite doppelt so groß ist. Außerdem wird die spezifische Staubbeladung (Staubmasse pro Filterfläche) des Filterelementes verbessert, weil durch die großen Zwischenräume in den Taschen der Falten 62 große Staubmengen aufgenommen werden können.

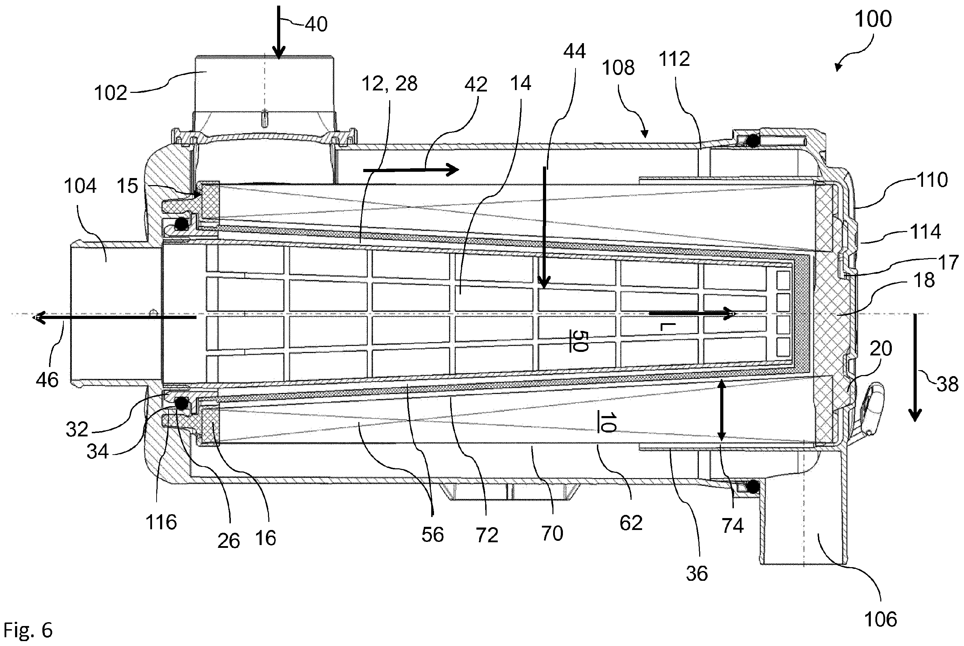

In Figur 6 ist ein Längsschnitt durch ein für das Verständnis der Erfindung hilfreiches Filtersystem 100 dargestellt, bei dem das Filtermedium 56 des Filterelements 10 eine halbkonische Faltung aufweist und das Filtermedium 56 des Sekundärelements 28 aus einem Vlies besteht. Das Filtermedium 56 des Filterelements 10 weist eine halbkonische Faltung auf, bei der die Innenkanten 72 auf der Mantelfläche eines Konus und die Außenkanten 70 der Falten 62 auf den Mantelflächen eines Zylinders liegen. Das Sekundärelement 28 ist an die konische Form der Innenkanten 72 des Filterelements 10 angepasst und umfasst ein Vlies, das auf einem konusförmigen Stützrohr 14 angebracht ist.

Die Konusform des Filtermediums 56 in Gestalt eines Vlieses als Sekundärelement 28 ermöglicht eine große Auslassöffnung und eine größere Filterfläche als ein vergleichbares, im Durchmesser kleineres gerades Sekundärelement 28 aus einem Vlies.

Das Sekundärelement 28 benötigt so kein eigenes Mittelrohr aus Kunststoff oder Metall und kann somit kostengünstiger hergestellt werden. Ein Kunststoffring 32, an dem das Vlies angebracht ist und an dem eine O-Ring-Dichtung 34 vorgesehen ist, ist zur Versteifung zweckmäßig.

Alternativ kann statt eines Vlieses ein einfacher sterngefalteter Filterbalg in konischer, an die Innenseite des Filterelements 10 angepasster Form verwendet werden, der bevorzugt eine konstante und im Vergleich zum Filterelement 10 geringe Faltenhöhe aufweist, beispielsweise kleiner oder gleich 10 mm, bevorzugt kleiner oder gleich 5 mm.

Das mit halbkonischer Faltung ausgestattete Filterelement 10 bietet nun die Möglichkeit, zum einen auf der Auslassseite den Auslassquerschnitt weiter zu öffnen, indem die Faltenhöhe 74 auf dieser Seite verringert wird (positiv für den Druckverlust), und zum Anderen keinen Verlust an Filterfläche aufzuweisen, weil die Faltenhöhe 74 auf der geschlossenen Seite doppelt so groß ist. Außerdem wird die spezifische Staubbeladung (Staubmasse pro Filterfläche) des Filterelementes verbessert, weil durch die großen Zwischenräume in den Taschen der Falten 62 große Staubmengen aufgenommen werden können.

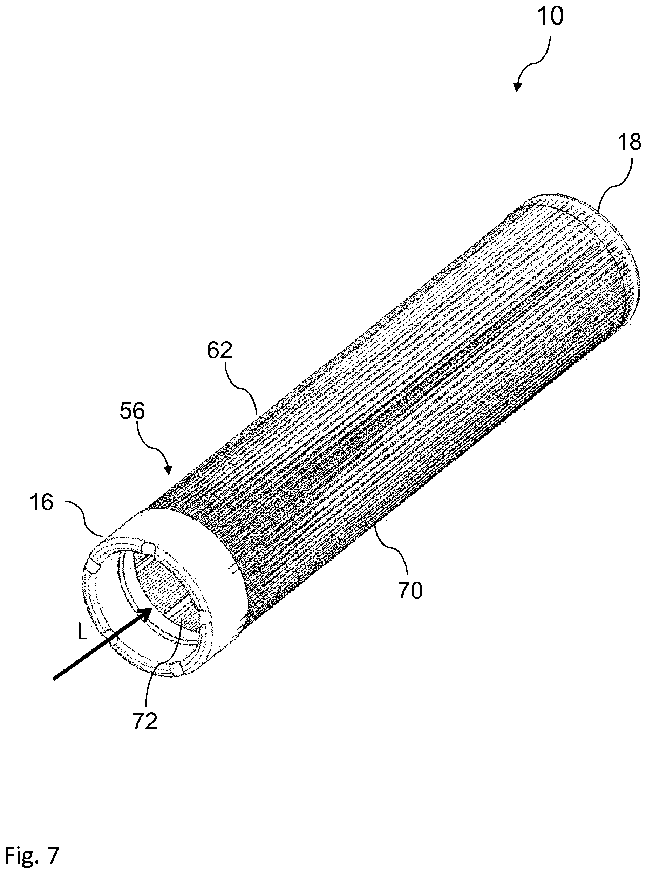

Figur 7 zeigt ein Filterelement 10 nach einem Ausführungsbeispiel der Erfindung mit halbkonischer Faltung des Filtermediums 56. Das Filterelement 10 ist an beiden Enden mit einer ersten und einer zweiten Endscheibe 16, 18 abgeschlossen, die zur Stabilität des Filterelements 10 sowie zur Abdichtung beim Einbau in das Gehäuse 108 eines Filtersystems 100 dienen. Das Filtermedium 56 weist eine halbkonische Faltung dergestalt auf, dass die Außenkanten 70 der Falten 62 auf der Mantelfläche eines Zylinders liegen und die Innenkanten 72 auf der Mantelfläche eines Konus liegen.

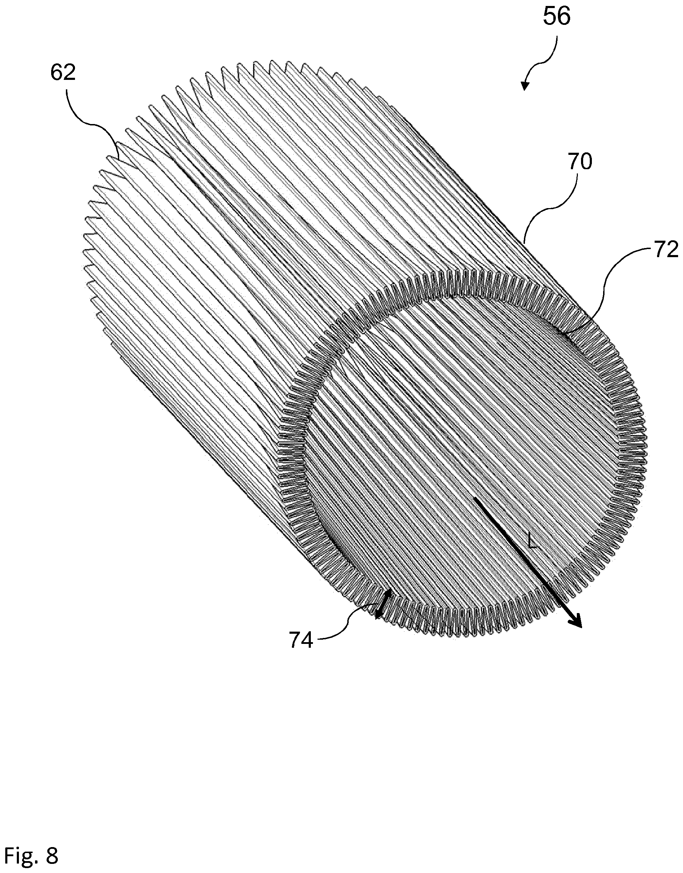

Figur 8 zeigt weiter ein Filtermedium 56 nach einem Ausführungsbeispiel der Erfindung mit halbkonischer Faltung des Filtermediums 56. Die Außenkanten 70 der Falten 62 des Filtermediums 56 liegen auf der Mantelfläche eines Zylinders und die Innenkanten 72 liegen auf der Mantelfläche eines Konus. Man erkennt in Figur 8, dass die Falten 62 in Längsrichtung L dichter werden, während die Faltenhöhe 74 in Längsrichtung L kontinuierlich abnimmt, sodass der Konus sich demzufolge in Längsrichtung L öffnet. Das Filtermedium 56 weist also einen entlang der Längsachse L veränderlichen Strömungswiderstand auf, wobei er in dem gezeigten Ausführungsbeispiel auf der Außenseite zunimmt, während er auf der Innenseite durch den sich öffnenden Innenquerschnitt entlang der Längsachse L abnimmt.

## Patentansprüche

1. Filtersystem (100), umfassend
- ein erstes, mit wenigstens einem Filtermedium (56) ausgestattetes Filterelement (10),
- und ein im Inneren (50) des Filterelements (10) angeordnetes Sekundärelement (28), wobei sich das Filterelement (10) und das Sekundärelement entlang einer Längsachse (L) erstrecken,
- ein Gehäuse (108) mit Gehäusewand (112) und einem Deckel (110),
- einen am Gehäuse (108) tangential angeordneten Einlass (102) zum Zuführen eines zu filternden Fluids, insbesondere Luft,
- einen Zyklonabscheider (36), der eine Rotationsbewegung des zugeführten zu filternden Fluids, insbesondere der Luft bewirkt,
- einen Schmutzauslass (106), durch den durch die Rotationsbewegung teilweise vorabgeschiedene und sich an der inneren Gehäusewand ablagernde Staubpartikel entleert werden,
- einen am Gehäuse (108) angeordneten zentrischen Auslass (104) zur Ableitung des gefilterten Fluids,
wobei das Filtermedium (56) des Filterelements (10) zickzackförmig gefaltet und ringförmig geschlossen ausgeführt ist und eine Mehrzahl von sich entlang der Längsachse (L) erstreckenden Außenkanten (70) und den Außenkanten (70) auf der gegenüberliegenden Seite des Filtermediums (56) gegenüberliegende Innenkanten (72) von Falten (62) aufweist, wobei die Außenkanten (70) und die Innenkanten (72) der Falten (62) auf den Mantelflächen eines Zylinders liegen,
wobei das Filtermedium (56) des Sekundärelements (28) zickzackförmig gefaltet und ringförmig geschlossen ausgeführt ist und eine Mehrzahl von sich entlang der Längsachse (L) erstreckenden Außenkanten (70) und den Außenkanten (70) auf der gegenüberliegenden Seite des Filtermediums (56) gegenüberliegende Innenkanten (72) von Falten (62) aufweist, wobei die Außenkanten (70) der Falten (62) auf einer Mantelfläche eines Zylinders liegen und die Innenkanten (72) auf der Mantelfläche eines Konus liegen, wobei die Faltenhöhe auf Auslassseite verringert ist, und wobei das Filtermedium (56) des Sekundärelements (28) einen entlang der Längsachse (L) veränderlichen Strömungswiderstand aufweist.

2. Filtersystem nach Anspruch 1, wobei eine Faltenhöhe (74) der Falten (62) des Sekundärelements (28) sich entlang der Längsachse (L) kontinuierlich ändert.

3. Filtersystem nach einem der vorhergehenden Ansprüche, wobei ein Stützrohr (14) im Inneren des Sekundärelements (28) angeordnet ist.

4. Filtersystem nach einem der vorhergehenden Ansprüche, wobei ein Filtermedium (56) des Sekundärelements (28) aus einem Vlies besteht.

5. Filtersystem nach einem der vorhergehenden Ansprüche, wobei das Sekundärelement (28) mit dem Gehäuse (108) verbunden ist und beim Wechsel des Filterelements (10) im Gehäuse (108) verbleibt.

6. Filtersystem nach einem der vorhergehenden Ansprüche, wobei wenigstens eines der Filterelemente (10, 12) auswechselbar in dem Gehäuse (108) des Filtersystems (100) angeordnet ist.

7. Verwendung eines Filtersystems (10) nach einem der vorhergehenden Ansprüche als Luftfilter, insbesondere als Luftfilter einer Brennkraftmaschine.

## Claims

1. Filter system (100), comprising
- a first filter element (10) equipped with at least one filter medium (56),
- and a secondary element (28) disposed inside (50) the filter element (10), the filter element (10) and the secondary element extending along a longitudinal axis (L),
- a housing (108) with housing wall (112) and a cover (110),
- an inlet (102) tangentially disposed at the housing (108) for supplying a fluid to be filtered, in particular air,
- a cyclone separator (36) which causes a rotational movement of the supplied fluid to be filtered, in particular the air,
- a dirt outlet (106) through which dust particles partially pre-separated by the rotational movement and deposited on the inner housing wall are discharged,
- a central outlet (104) disposed at the housing (108) for discharging the filtered fluid,
wherein the filter medium (56) of the filter element (10) is zigzag-folded and realized in an annularly closed design and features a plurality of outer edges (70) extending along the longitudinal axis (L) and inner edges (72) of folds (62) opposing the outer edges (70) on the opposing side of the filter medium (56), wherein the outer edges (70) and the inner edges (72) of the folds (62) rest on the circumferential surfaces of a cylinder, wherein the filter medium (56) of the secondary element (28) is zigzag-folded and realized as an annularly closed design and features a plurality of outer edges (70) extending along the longitudinal axis (L) and inner edges (72) of folds (62) opposing the outer edges (70) on the opposing side of the filter medium (56), wherein the outer edges (70) of the folds (62) rest on a circumferential surface of a cylinder and the inner edges (72) rest on the circumferential surface of a cone, wherein the fold height on the outlet side is reduced, and wherein the filter medium (56) of the secondary element (28) features a variable flow resistance along the longitudinal axis (L).

2. Filter system according to claim 1, wherein a fold height (74) of the folds (62) of the secondary element (28) changes continuously along the longitudinal axis (L).

3. Filter system according to one of the above claims, wherein a support tube (14) is disposed inside the secondary element (28).

4. Filter system according to one of the above claims, wherein a filter medium (56) of the secondary element (28) consists of a non-woven fabric.

5. Filter system according to one of the above claims, wherein the secondary element (28) is connected to the housing (108) and remains in the housing (108) when changing the filter element (10).

6. Filter system according to one of the above claims, wherein at least one of the filter elements (10, 12) is replaceably disposed in the housing (108) of the filter system (100).

7. Use of a filter system (10) according to one of the above claims as air filter, in particular as air filter of an internal combustion engine.

## Revendications

1. Système de filtre (100), comprenant
- un premier élément filtrant (10) équipé d'au moins un milieu filtrant (56),
- et un élément secondaire (28) disposé à l'intérieur (50) de l'élément filtrant (10), l'élément filtrant (10) et l'élément secondaire s'étendant le long d'un axe longitudinal (L),
- un boîtier (108) avec une paroi de boîtier (112) et un couvercle (110),
- une entrée (102) disposée tangentiellement sur le boîtier (108) permettant d'introduire un fluide à filtrer, en particulier de l'air,
- un séparateur cyclonique (36) qui provoque un mouvement de rotation du fluide à filtrer introduit, en particulier de l'air,
- une sortie d'impuretés (106), par laquelle des particules de poussière partiellement préséparées par le mouvement de rotation et se déposant sur la paroi intérieure du boîtier sont évacuées,
- une sortie centrale (104) disposée sur le boîtier (108) permettant d'évacuer le fluide filtré,
le milieu filtrant (56) de l'élément filtrant (10) étant plié en zigzag et fermé de manière annulaire et présentant une pluralité de bords extérieurs (70) s'étendant le long de l'axe longitudinal (L) et de bords intérieurs (72) de plis (62) opposés aux bords extérieurs (70) sur le côté opposé du milieu filtrant (56), les bords extérieurs (70) et les bords intérieurs (72) des plis (62) reposant sur les surfaces enveloppantes d'un cylindre, le milieu filtrant (56) de l'élément secondaire (28) étant plié en zigzag et fermé de manière annulaire et présentant une pluralité de bords extérieurs (70) s'étendant le long de l'axe longitudinal (L) et de bords intérieurs (72) de plis (62) opposés aux bords extérieurs (70) sur le côté opposé du milieu filtrant (56), les bords extérieurs (70) des plis (62) reposant sur une surface enveloppante d'un cylindre et les bords intérieurs (72) reposant sur la surface enveloppante d'un cône, la hauteur des plis du côté sortie étant réduite, et le milieu filtrant (56) de l'élément secondaire (28) présentant une résistance à l'écoulement variable le long de l'axe longitudinal (L).

2. Système de filtre selon la revendication 1, une hauteur de pli (74) des plis (62) de l'élément secondaire (28) changeant continuellement le long de l'axe longitudinal (L).

3. Système de filtre selon l'une des revendications précédentes, un tube de support (14) étant disposé à l'intérieur de l'élément secondaire (28).

4. Système de filtre selon l'une des revendications précédentes, un milieu filtrant (56) de l'élément secondaire (28) étant constitué d'un non-tissé.

5. Système de filtre selon l'une des revendications précédentes, l'élément secondaire (28) étant relié au boîtier (108) et restant dans le boîtier (108) lors de l'échange de l'élément filtrant (10).

6. Système de filtre selon l'une des revendications précédentes, au moins l'un des éléments filtrants (10, 12) étant disposé de manière échangeable dans le boîtier (108) du système de filtration (100).

7. Utilisation d'un système de filtre (10) selon l'une des revendications précédentes, en tant que filtre à air, en particulier en tant que filtre à air d'un moteur à combustion interne.
